# EUROPEAN PATENT APPLICATION

(11) **EP 2 557 621 A1**
(43) Date of publication of application: **13.02.2013**
(21) Application number: 11177122.6
(22) Date of filing: 10.08.2011
(51) Int. Cl.: H01M 8/02, H01M 8/10

(54) **Fuel cell**

(71) Applicant: The European Union, represented by the European Commission, 1049 Brussels (BE)
(72) Inventor: Wilkening, Heinz, D-31515 Wunstorf (DE); Veyret, Damien, B-1200 Brussels (BE)
(74) Representative: Office Freylinger

(57) **Abstract**

The present invention proposes a fuel cell, in particular a proton exchange membrane fuel cell, comprising a reactant gas inlet (12), a reactant gas outlet (14) and a plurality of reactant gas flow channels (20) between the reactant gas inlet (12) and the reactant gas outlet (14). The reactant gas flow channels (20) are arranged and configured so as to define an inlet distribution area (18) connected to the reactant gas inlet (12) for receiving reactant gas; a reaction zone (16) with an interdigitated flow field comprising a plurality of interdigitated flow channels (20) and ribs (22) arranged between neighbouring flow channels (20), the flow channels (20) being fluidly connected to the inlet distribution area (18) for receiving reactant gas; and an outlet distribution area (24) fluidly connected to the flow channels (20) for receiving reactant gas from the flow channels (20); and for feeding the reactant gas to the reactant gas outlet (14). According to an aspect of the invention, the ribs (22) comprise a plurality of interconnecting channels (28) between neighbouring flow channels.

## Description

The present invention relates to a fuel cell, in particular a proton exchange membrane fuel cell, for use in portable power sources, electric vehicle power sources, domestic cogeneration systems or the like.

Hydrogen is a very attractive fuel because it is clean and can be used to efficiently produce electricity in a fuel cell. The automotive industry expends significant resources in the development of hydrogen fuel cells as a source of power for vehicles. Such vehicles would be more efficient and generate fewer emissions than today's vehicles employing internal combustion engines.

A hydrogen fuel cell is an electrochemical device that includes an anode and a cathode with an electrolyte therebetween. The anode receives hydrogen gas and the cathode receives oxygen or air. The hydrogen gas is dissociated in the anode to generate free protons and electrons. The protons pass through the electrolyte to the cathode. The protons react with the oxygen and the electrons in the cathode to generate water. The electrons from the anode cannot pass through the electrolyte, and thus are directed through a load to perform work before being sent to the cathode.

Proton exchange membrane (PEM) fuel cells are popular fuel cells for vehicles. The PEM fuel cell generally includes a solid polymer-electrolyte proton-conducting membrane, such as a perfluorosulfonic acid membrane. The anode and cathode typically include finely divided catalytic particles, usually platinum (Pt), supported on carbon particles and mixed with an ionomer. The catalytic mixture is deposited on opposing sides of the membrane. The combination of the anode catalytic mixture, the cathode catalytic mixture and the membrane define a membrane electrode assembly (MEA). MEAs are relatively expensive to manufacture and require certain conditions for effective operation.

Several fuel cells are typically combined in a fuel cell stack to generate the desired power. For the automotive fuel cell stack mentioned above, the stack may include about two hundred or more fuel cells. The fuel cell stack receives a cathode reactant gas, typically a flow of air forced through the stack by a compressor. Not all of the oxygen is consumed by the stack and some of the air is output as a cathode exhaust gas that may include water as a stack byproduct. The fuel cell stack also receives an anode hydrogen reactant gas that flows into the anode side of the stack.

The fuel cell stack includes a series of flow field plates positioned between the several MEAs in the stack. The flow field plates include an anode side and a cathode side for adjacent fuel cells in the stack. Anode gas flow channels are provided on the anode side of the flow field plates that allow the anode gas to flow to the anode side of the MEA. Cathode gas flow channels are provided on the cathode side of the bipolar plates that allow the cathode gas to flow to the cathode side of the MEA. The flow field plates also include flow channels through which a cooling fluid flows. Gas diffusion layers (GDL) are provided between the flow field plates and the catalyst layer to allow gas transport to the catalyst layer and water transport from the MEA.

As is well understood in the art, the membranes within a fuel cell need to have a certain relative humidity so that the ionic resistance across the membrane is low enough to effectively conduct protons. Water vapour and liquid water are generated by the electrochemical process and provide some or all of the necessary humidification. The cathode inlet air and anode inlet hydrogen may be humidified in some fuel designs for this purpose. However, during operation of the fuel cell, moisture from the MEAs and the external humidification may collect in the diffusion media layers, especially around lands of the plates between the flow channels and in the anode and cathode flow channels. Significant water accumulation in the diffusion media layers may prevent some of the reactant gas flow from reaching the catalyst layers, which may reduce cell performance.

In short, water management is crucial to the performance of the fuel cell: too much water will flood the fuel cell (flow channels, GDLs); too little water will dry the membrane. In both cases, the result is a drop in power output. A variety of solutions for managing water have been suggested, such as e.g. integrating pumps. A more cost effective solution is the altering the flow field design of the reactant gas flow channels.

Typically, there are two flow field designs that are generally used: The parallel flow field design essentially provides straight flow channels between the inlet and the outlet of the fuel cell. The interdigitated flow field design also provides straight flow channels wherein, however, every other flow channel is blocked at the inlet end and every other opposite flow channel is blocked at the outlet end, thereby forming interdigitated flow channels forcing the reactant gas through the diffusion media layer to get from the inlet to the outlet of the fuel cell. The flow of the reactant gas over the lands of the flow field plate in the gas diffusion layer (GDL) forces the water into the adjacent channels and out of the fuel cell. A fuel cell will benefit mostly by providing the interdigitated reactant gas flow on the cathode side of the fuel cells. However, it is known to also be beneficial to provide such interdigitated flow on the anode side of the fuel cells.

By blocking the reactant gas flow channels in this manner to provide the interdigitated flow, a pressure drop is created across the stack that makes the compressor have to work harder to force the reactant gas through the stack, thus consuming a significant amount of energy that affects system performance. Also, continuous interdigitated flow typically causes water accumulation at the outlet end of the inlet flow channels and the inlet end of the outlet flow channels that could block the flow channels.

### Object of the invention

The object of the present invention is to provide an improved fuel cell, in particular an improved fuel cell design, wherein fuel cell performance is improved. This object is solved by the fuel cell as described in claim 1.

### General description of the invention

The present invention proposes a fuel cell, in particular a proton exchange membrane fuel cell, comprising a reactant gas inlet, a reactant gas outlet and a plurality of reactant gas flow channels between the reactant gas inlet and the reactant gas outlet. The reactant gas flow channels are arranged and configured so as to define:
- an inlet distribution area connected to the reactant gas inlet for receiving reactant gas;
- a reaction zone with an interdigitated flow field comprising a plurality of interdigitated flow channels and ribs arranged between neighbouring flow channels, the flow channels being fluidly connected to the inlet distribution area for receiving reactant gas;
- an outlet distribution area fluidly connected to the flow channels for receiving reactant gas from the flow channels; and for feeding the reactant gas to the reactant gas outlet.

According to an aspect of the invention, the ribs comprise a plurality of interconnecting channels between neighbouring flow channels.

The interconnecting channels form a direct link between two neighbouring flow channels, thereby allowing some of the reactant gas to flow more freely from one flow channel to another. Due to the convective flow through the interconnecting channels, some convective flow is induced in the GDL through drag and inertia. The pressure drop in the interconnecting channels generates a pressure difference between the flow channels, thus also resulting in convective flow in the GDL.

It will be appreciated that the overall convective transport in the GDL will not only depend on the number of interconnecting channels in the rib, but also on their position and cross-section. In areas of the interdigitated flow field where e.g. the mass transport is insufficient, the number of interconnecting channels may be greater, or the cross-section of the interconnecting channels may be increased.

The interconnecting channels in the ribs between neighbouring flow channels thus allows overcoming the problems of insufficient mass transport and varying mass flow rate over the ribs. In particular, by choosing the number, position and cross-section of the interconnecting channels for selected areas of the fuel cell, the mass transport and mass flow rate can be improved in targeted areas.

Advantageously, the plurality of interconnecting channels between neighbouring flow channels are arranged at an angle pointing towards the outlet distribution area. Preferably such an angle is between 20° and 160° with respect of an axis of the flow channels. The orientation of the interconnecting channels has an influence on the flow pattern of reactant gas through the flow channels and across the GDL. Thus, by choosing the orientation of the interconnecting channels, the pressure drop between flow channels and thus mass transport and mass flow rate can be selectively increased or decreased as appropriate.

Advantageously, the plurality of interconnecting channels have a cross-section which, when added together, is smaller than the cross-section of a flow channel.

According to an aspect of the invention, the ribs are arranged between neighbouring flow channels are configured such that, over at least a portion of their length, the ribs have a variable width, gradually narrowing towards a central portion of the ribs. Preferably, the gradual narrowing of the ribs has a curved shape. Advantageously, the ribs are formed with a variable width such that the flow channels have a bulging cross-section.

The narrowing ribs allow influencing the mass flow rate across the ribs. Indeed, with constant width ribs, it has been noted that the mass flow rate over the ribs is non-constant. By using narrowing ribs, i.e. bulging flow channels, the pressure drop in the flow channels is varied and thus the mass flow rate over the ribs can be rendered more constant over the length of the rib.

It should also be noted that the bulging of the flow channels have a positive effect of the efficiency of the fuel cell irrespective of whether or not the ribs are provided with interconnecting channels.

According to a further aspect of the invention, the reaction zone is divided into at least two portions, wherein
- a first portion comprises interdigitated flow channels being fluidly connected to the inlet distribution area
- a second portion comprises interdigitated flow channels being fluidly connected to the outlet distribution area
   and wherein at least one intermediate distribution area is arranged between the at least two portions for feeding reactant gas from the first portion to the second portion.

By splitting the reaction zone into two or more portions, with an intermediate distribution area therebetween, the lengths of the flow channels and of the ribs are shortened. With an increasing number of portions, the gas flow is forced to alternate between flow channels more often, thereby enhancing the reactant gas flow through the fuel cell.

It should be noted that a number of parameters may be changed to increase fuel performance. The respective lengths of the flow channels in the first and second portions of the reaction zones may be adapted. The number of interconnecting channels may be adapted locally to control the flow rate in the interconnecting channels by controlling pressure drop. The cross-section (height and width) of interconnecting channels may be adapted locally to control the flow velocity in the interconnecting channels by controlling pressure drop. Furthermore, it should ne noted that the intermediate distribution area may comprise one or more communication segments, each of these communication segments being arranged for fluidly connecting one or more flow channels of the first portion to one or more flow channels of the second portion.

### Detailed description with respect to the figures

The present invention will be more apparent from the following description of some not limiting embodiment with reference to the attached drawings, wherein
Fig.1 shows a schematic cut through the reactant gas flow channels of a fuel cell according to a first embodiment of the invention; and
Fig.2 shows a schematic cut through the reactant gas flow channels of a fuel cell according to a second embodiment of the invention.

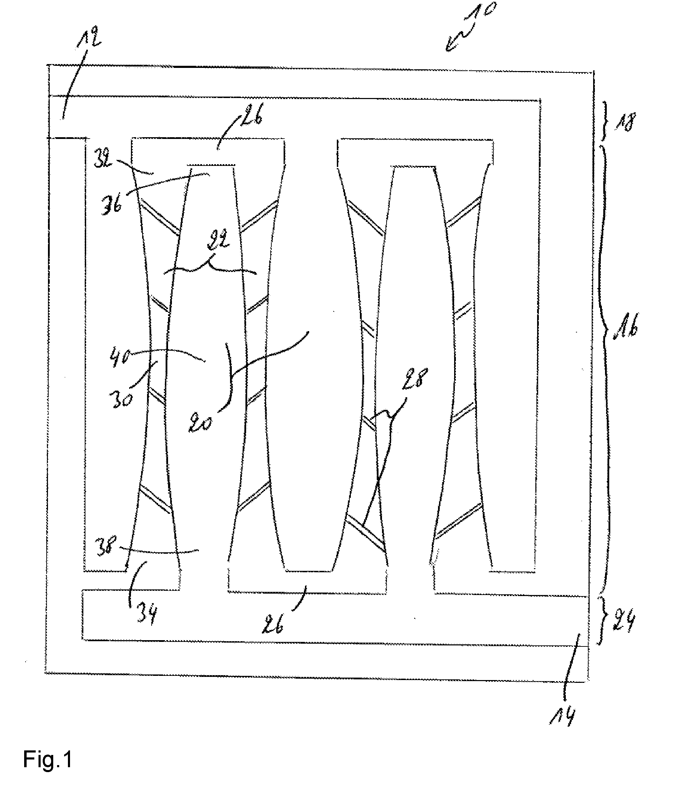

Figure 1 shows a flow design for a fuel cell, in particular a proton exchange membrane fuel cell, according to a first embodiment of the present invention.

The flow design 10 comprises a reactant gas inlet 12, a reactant gas outlet 14 and a plurality of reactant gas flow channels therebetween. The reactant gas flow channels are arranged so as to define a reaction zone 16, wherein flow channels are arranged in an interdigitated configuration.

An inlet distribution area 18 is arranged upstream of the reaction zone 16 for receiving reactant gas from the reactant gas inlet 12 and delivering it to the reaction zone 16. The reaction zone 16 presents an interdigitated flow field comprising a plurality of flow channels 20 separated form one another by ribs 22. The reactant gas flows from the inlet distribution area 18, into the flow channels 20 fluidly connected thereto towards an outlet distribution area 24. The outlet distribution area 24 collects the reactant gas from the flow channels 20 fluidly connected thereto for delivery to the reactant gas outlet 14 for evacuating the reactant gas form the flow design 10.

In the reaction zone 16, alternate inlet ends and outlet ends of the flow channels 20 are blocked by end ribs 26. The reactant gas is thus prevented from flowing directly from the inlet distribution area 18 to the outlet distribution area 24 by these end ribs 26. The reactant gas is forced to flow through the gas diffusion layer GDL (not shown) arranged between the flow channels 20 and the proton exchange membrane. Indeed, by flowing through the gas diffusion layer (GDL), the reactant gas is able to bridge the ribs 22 separating neighbouring flow channels 20. Reactant gas is forced from flow channels 20 opening into the inlet distribution area 18 into flow channels 20 opening into the outlet distribution area 24.

According to an aspect of the invention, the ribs 22 are provided with a plurality of interconnecting channels 28 connecting two neighbouring flow channels 20. Such interconnecting channels 28 allow some of the reactant gas to flow more freely from one flow channel 20 to another. The convective flow through the interconnecting channels 28 induces some convective flow in the GDL. Furthermore, the pressure drop in the interconnecting channels 28 generates a pressure difference between the flow channels 20, thus also resulting in convective flow in the GDL.

The interconnecting channels 28 in the ribs 22 between neighbouring flow channels 20 allow improving the overall performance of the fuel cell by selectively influencing pressure drop, mass transport and mass flow rate.

It should be noted that the number, position, orientation and size of the interconnecting channels 28 are in Fig.1 indicated for strictly illustrative purposes only.

According to a further aspect of the invention, the ribs 22 are configured such that they have variable width, gradually narrowing towards a central portion 30 of the ribs 22. Indeed, the ribs 22 are narrow in the central portion 30 of the rib 22 and widen in direction of the end portions 32, 34 of the rib 22. Such ribs 22 cause the flow channels 20 to have a bulging cross-section. Indeed, the flow channels 20 are narrow in the end portions 36, 38 of the flow channels 20 and widen in direction of the central portion 40 of the flow channels 20. The narrowing ribs 22 or bulging flow channels 20 allow influencing the pressure drop in the flow channels 20 and thus rendering the mass flow rate over the ribs 22 more constant over the length of the ribs 22.

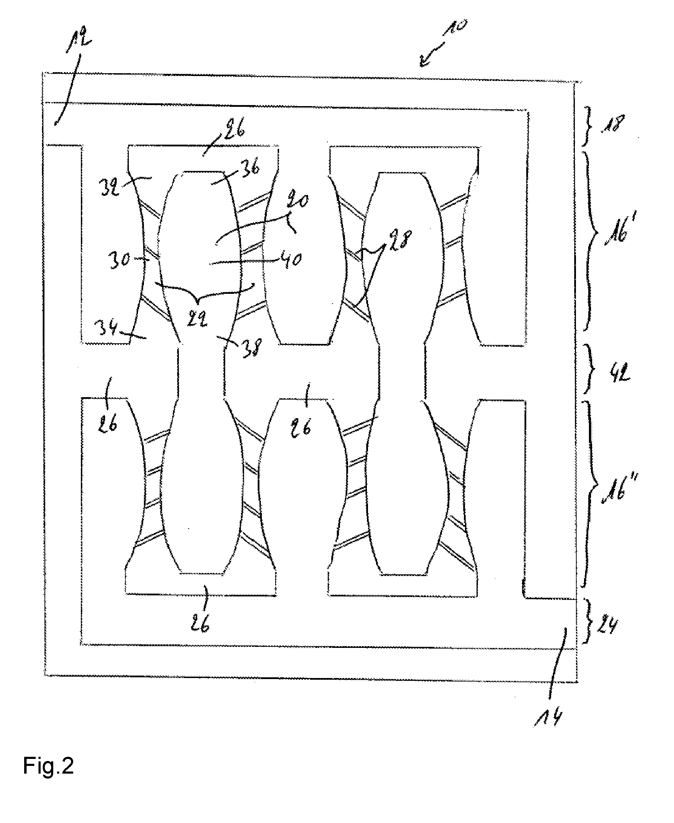

Figure 2 shows a flow design for a fuel cell, in particular a proton exchange membrane fuel cell, according to a second embodiment of the present invention. In this embodiment, the reaction zone 16 is split into two separate portions 16', 16", wherein each of these portions 16', 16" comprises a flow channel design similar to the one of reaction zone 16 of Figure 1. Not all details explained above are explained again for Figure 2. Same reference signs denote same features as in Fig.1.

The main difference between the two embodiments is indeed the dividing of the reaction zone 16 into a first reaction zone portion 16' and a second reaction zone portion 16" with an intermediate distribution area 42 arranged therebetween.

The intermediate distribution area 42 creates a fluid connection from the first reaction zone portion 16' to the second reaction zone portion 16", thus allowing the reactant gas to flow from the inlet distribution area 18 to the outlet distribution area 24. Although Figure 2 shows the splitting of the reaction zone into two portions, it should be noted that more than two portions are also possible. With an increasing number of portions, the gas flow is forced to alternate between flow channels more often, thereby enhancing the reactant gas flow through the fuel cell.

It should also be noted that the first and second reaction zone portions 16', 16" need not be identical. Indeed, there may be differences in the number, lengths and widths of the flow channels 20. Similarly, the number, orientation, position and cross-section of the interconnecting channels 28 may also vary from one reaction zone portion to another. As an example, in Figure 2, the number of interconnecting channels 28 in the second reaction zone portion 16" is higher than in the first reaction zone portion 16'.

In the embodiments shown above, the narrowest section of the rib 22 is centrally over the length of the rib. However, it should be noted that the narrow section may in fact be located anywhere along the length of the rib. As such, it may be possible to have the narrow section arranged near one of the distribution areas and widening towards another one of the distribution areas. Also, the narrowing or widening of the rib is not necessarily continuous, symmetric or regular. An irregular shape of the rib will consequently also produce an irregular shape of the neighbouring flow channel 20.

Finally, it should be noted that in both Figures 1 and 2, any dimensions may be greatly exaggerated in order to more clearly illustrate the invention and should in no way be considered limitative.

### List of Reference Signs

- 10: flow design
- 12: reactant gas inlet
- 14: reactant gas outlet
- 16: reaction zone
- 18: inlet distribution area
- 20: flow channels
- 22: ribs
- 24: outlet distribution area
- 26: end ribs
- 28: interconnecting channels

- 30: central portion of the rib
- 32: end portion of rib
- 34: end portion of rib
- 36: end portion of flow channel
- 38: end portion of flow channel
- 40: central portion of flow channel
- 16': first reaction zone portion
- 16": second reaction zone portion
- 42: intermediate distribution area

## Claims

1. A fuel cell, in particular a proton exchange membrane fuel cell, comprising a reactant gas inlet, a reactant gas outlet and a plurality of reactant gas flow channels between said reactant gas inlet and said reactant gas outlet,
said reactant gas flow channels being arranged and configured so as to define:
an inlet distribution area connected to said reactant gas inlet for receiving reactant gas;
a reaction zone with an interdigitated flow field comprising a plurality of interdigitated flow channels and ribs arranged between neighbouring flow channels, said flow channels being fluidly connected to said inlet distribution area for receiving reactant gas;
an outlet distribution area fluidly connected to said flow channels for receiving reactant gas from said flow channels; and for feeding said reactant gas to said reactant gas outlet
**characterized in that**
said ribs comprise a plurality of interconnecting channels between neighbouring flow channels.

2. The fuel cell according to claim 1, wherein said plurality of interconnecting channels between neighbouring flow channels are arranged at an angle pointing towards said outlet distribution area.

3. The fuel cell according to claim 2, wherein said plurality of interconnecting channels between neighbouring flow channels are arranged at an angle between 20° and 160° with respect of an axis of said flow channels.

4. The fuel cell according to any of claims 1 to 3, wherein said plurality of interconnecting channels have a cross-section which, when added together, is smaller than the cross-section of a flow channel.

5. The fuel cell according to any of the previous claims, wherein said ribs arranged between neighbouring flow channels are configured such that, over at least a portion of their length, said ribs have a variable width, gradually narrowing towards a central portion of said ribs.

6. The fuel cell according to claim 5, wherein said gradual narrowing of said ribs has a curved shape.

7. The fuel cell according to claim 5 or 6, wherein said ribs are formed with a variable width such that said flow channels have a bulging cross-section.

8. The fuel cell according to any of the previous claims, wherein said reaction zone is divided into at least two portions:
a first portion comprising interdigitated flow channels being fluidly connected to said inlet distribution area
a second portion comprising interdigitated flow channels being fluidly connected to said outlet distribution area
wherein at least one intermediate distribution area is arranged between said at least two portions for feeding reactant gas from said first portion to said second portion.
